# EUROPÄISCHE PATENTSCHRIFT

(11) **EP 2 135 796 B1**
(45) Veröffentlichungstag und Bekanntmachung des Hinweises auf die Patenterteilung: **28.11.2012**
(21) Anmeldenummer: 09158791.5
(22) Anmeldetag: 27.04.2009
(51) Int. Cl.: H02K 5/04, H02K 11/00, B62D 5/04

(54) **Getriebe-Antriebseinheit sowie einem Verfahren zur Herstellung einer solchen**
Gear drive unit and method for producing same
Unité d'entraînement d'engrenage et procédé de fabrication de celle-ci

(30) Priorität: 10.03.2009 DE 102009001419; 16.06.2008 DE 102008028271
(43) Veröffentlichungstag der Anmeldung: 23.12.2009
(73) Patentinhaber: Robert Bosch GmbH, 70442 Stuttgart (DE)
(72) Erfinder: Maly, Robert, 31139 Hildesheim (DE); Neubauer, Achim, 76547 Sinzheim-Vormberg (DE); Bergmann, Dirk, 38122 Braunschweig (DE); Beier, Mirco, 31028 Gronau (DE)

(56) Entgegenhaltungen:
- EP-A1- 1 022 210
- WO-A1-98/26972
- WO-A2-2007/035668
- DE-A1- 19 714 784

## Beschreibung

### Stand der Technik

Die Erfindung geht aus von einer Getriebe-Antriebseinheit sowie einem Verfahren zur Herstellung einer solchen nach der Gattung der unabhängigen Ansprüche.

Mit der DE 10 2005 059 162 A1 ist ein Elektromotor bekannt geworden, bei dem an einem wärmeleitenden Befestigungskörper ein Steuergerät außerhalb des Motorgehäuses befestigt ist. Der Befestigungskörper ist hierbei gleichzeitig mit einem Getriebegehäuse verbindbar, um an dieses Wärme abzuführen, die durch den Elektromotor erzeugt wird.

Für elektrische Lenkantriebe (EPS= Electric Power Steering) haben sich aufgrund ihrer Leistungsdichte, Wirkungsgrad und Regelmöglichkeit elektronisch kommutierte Asynchron- oder permanentmagneterregte Synchronmaschinen durchgesetzt. Man unterscheidet hierbei Lösungen bei denen das für den Motor erforderliche Steuergerät (ECU) zusammen mit dem Motor geliefert und als eine Einheit - das sogenannte ,Power Pack' (PP) - an das Lenksystem befestigt wird von solchen, bei denen Motor und ECU separat geliefert werden und mit Kabeln direkt oder über Stecker miteinander verbunden werden. Bei den PP-Lösungen ist es heute üblich, dass diese mit dem Lenkgetriebe verschraubt werden und zwar in der Form, dass eine Verschraubung zwischen Lenkgetriebe-/Lenkgehäuse und PP-Gehäuse (=Motorgehäuse) oder PP-Flansch über beispielsweise 3 bis 4 Schrauben erfolgt. Dabei liegt das PP-Gehäuse/der PP-Flansch am Lenkgetriebe- bzw. Lenkgehäuse an und wird mit diesem durch die Schrauben und einem gewissen Schraubenanzugsmoment verspannt.

Dadurch entsteht eine mechanische Verbindung zwischen Lenkgehäuse über Motorgehäuse zur ECU, neben der mechanischen Verbindung ECU zu "Draht-Stator-Motorpatrone" zum Lenkgetriebe.

Die Verspannung bzw. das Anzugsmoment der Schrauben muss dabei so gewählt werden, dass bei allen im Betrieb möglichen Temperaturausdehnungen die Motorpatrone und die ECU nicht auseinandergezogen werden können, um zu verhindern, dass die elektrische Verbindung zw. ECU und Motordraht/Motorpatrone beschädigt/überlastet werden kann. Dies erfordert im Regelfall kostenintensive technische Klimmzüge, insbesondere wenn wie heute üblich das Motorgehäuse und/oder der ECU-Grundkörper aus einem anderen Material (z.B. Aluminium-, Stahllegierung oder ähnliches) sind als die Lenkgetriebe-/Lenkgehäuse, die meistens aus Grauguss hergestellt sind.

Mit der WO 98/26972 A1 ist eine elektrische Antriebseinheit bekannt geworden, bei der ein Elektromotor in eine Hülse eingefügt wird, die am Getriebegehäuse angeordnet ist. Beim Einfügen des Elektromotors wird diese relektrisch mit einer Elektronikeinheit verbunden, die integraler Bestandteil des Getriebegehäuses ist. Danach wird auf den Elektromotor und die diesen umgebende Hülse eine Abdeckkappe aufgeschoben.

### Offenbarung der Erfindung

### Vorteile der Erfindung

Die erfindungsgemäße Getriebe-Antriebseinheit sowie das Verfahren zur Herstellung einer solchen mit den Merkmalen der unabhängigen Ansprüche haben demgegenüber den Vorteil, dass dadurch die Kosten für die Verbindung des PP mit Lenkgetriebegehäuse bzw. Lenkgehäuse reduziert werden, selbst wenn die Materialien dieser Lenkgehäuse unterschiedlich zu denen des Motorgehäuses und/oder der ECU sind. In diesem Zusammenhang dient die Erfindung dazu die Anstellung des Motorgehäuses (d.h. der Elektromotor-Patrone) an das Lenkgetriebegehäuse bzw. Lenkgehäuse zu eliminieren und unterschiedliche Toleranzen und Wärmeausdehnungen der beiden oben beschriebenen Verbindungswege ECU zu Lenkgehäuse auszugleichen.

Kern der Erfindung ist ein axial am Lenkgetriebegehäuse bzw. Lenkgehäuse nicht anstehendes PP- bzw. Motorgehäuse (Elektromotor-Patrone) in Kombination mit einer Verschraubung, die über die ECU dennoch die Motorpatrone gegen das Lenkgehäuse verspannt. Durch die in den abhängigen Ansprüchen aufgeführten Maßnahmen sind vorteilhafte Weiterbildungen und Verbesserungen möglich. Besonders vorteilhaft gegenüber bereits bekannten Lösungen sind:
- geringere Vorspannkräfte der Verschraubung und dadurch Kosteneinsparungen durch schwächere/dünnere Ausführung der Schrauben bzw. der Materialdicken bei den entsprechenden Flanschen im Lenkgehäuse, am Motorgehäuse und/oder an der ECU-Grundplatte
- keine Verbindungen bzw. Führungen für die Schrauben am Motorgehäuse mehr erforderlich und dadurch Kosteneinsparungen bzgl. Material am Motorgehäuse, sowie die Option das Motor- bzw. PP-Gehäuse mit einheitlicher Wandstärke auszuführen und damit die Möglichkeit zu schaffen Motorgehäuse und ECU-Grundplatte per Laserschweißverfahren kostengünstig und dicht miteinander zu verbinden (z.B. Entfall hochpräziser Dichtflächen an Motorgehäuse und ECU für Dichtungen zw. ECU und Motor sowie Entfall der Dichtungen selbst).
- das axial verschiebbare Motorgehäuse erlaubt eine Verschweißung der aus der ECU herausstehenden Schweißfahnen mit dem aus dem Motor vorstehenden Phasendrähten bei nur zu circa 2/3 über die Motorpatrone aufgeschobenem Motorgehäuse mittels Schweißzangen. Nach dem Verschweißen wird das Gehäuse dann wie üblich gegen den Anschlag der ECU-Grundplatte hochgeschoben und per Laser verschweißt. Damit können die Kosten für die Verbindung ECU-Motor reduziert werden, das PP um den entsprechenden Längenvorhalt für Toleranzen reduziert werden (Stoffeinsparung) und gleichzeitig die Wärmeableitung von ECU-Wärmeverlusten über das Motorgehäuse zum Lenksystem gegenüber einer heute üblichen Press- oder Schraubverbindung durch das Schweißverfahren verbessert werden.
- Die direkte Verspannung der Motorpatrone gegen das Lenkgehäuse, insbesondere bei sog. Pinion-Lenksystemen (Single und Dual Pinion) reduziert zusätzlich die Anforderungen an die Motorpatronen-Haltekraft von Entkopplungs- bzw. Arretierungsbauteilen, zum axialen Halten/Fixieren der Motorpatrone im Motorgehäuse (z.B. Spannstifte oder ähnliches) und erlaubt gegebenenfalls geringeren Montageaufwand zum Vorverformen der Entkopplungs- bzw. Arretierungsbauteilen oder die Verwendung kostengünstigerer Materialien für diese Bauteile. Außerdem ermöglicht Sie gegebenenfalls den Entfall einer Verschweißung des Statorpakets in der Motorpatrone, da das Paket dann permanent direkt über die ECU vorgespannt wäre.

### Kurze Beschreibung der Zeichnung

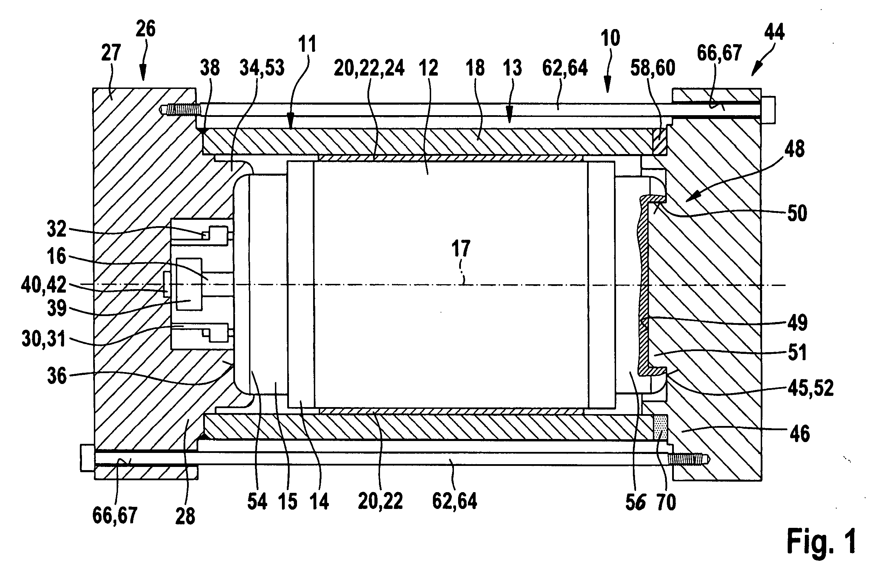

Ausführungsbeispiele der Erfindung sind in der Zeichnung dargestellt und in der nachfolgenden Beschreibung näher erläutert. Es zeigt
Figur 1: eine Ansicht einer erfindungsgemäßen Getriebe-Antriebseinheit.

Figur 1 beschreibt eine Getriebe-Antriebseinheit 10, bei der eine Elektromotor-Patrone 12 zwischen einer Elektronikeinheit 26 (ECU) und einem Lenkgetriebe 44 angeordnet ist. Die Elektromotor-Patrone 12 weist ein Statorpaket 14 und einen auf einer Ankerwelle 16 angeordneten Rotor 15 auf. Die Ankerwelle 16 ist hierbei auf einer Rotationsachse 17 des Elektromotors 13 angeordnet, wobei im Ausführungsbeispiel der Elektromotor 13 als Innenläufer ausgebildet ist. Der Elektromotor 13 besteht aus der Elektromotor-Patrone 12, die einen ersten Lagerschild 54 zur Elektronikeinheit 26 hin, und einen zweiten Lagerschild 56 zum Lenkgetriebe 44 hin aufweist. Des Weiteren weist der Elektromotor 13 eine gegenüber der Elektromotor-Patrone 12 verschiebbare Motorengehäuse-Hülse 18 auf, die unabhängig von der Elektromotor-Patrone 12 montierbar ist. Zur elektrischen Kontaktieren weist die Elektromotor-Patrone 12 Phasendrähte 32 auf, die mit Kontaktfahnen 30 der Elektronikeinheit 26 elektrisch verbunden sind. Dabei sind die Kontaktfahnen 30 vorzugsweise als Schweißfahnen 31 ausgebildet, die mit den Phasendrähten 32 verschweißt sind. Auf der Ankerwelle 16 ist beispielsweise ein Drehzahlgeber 39 angeordnet, der mit einem gegenüberliegenden Sensor 40 der Elektronikeinheit 26 zusammenwirkt. Der Drehzahlgeber 39 ist beispielsweise als planarer Magnet ausgebildet, der mit einem Magnetsensor in Wechselwirkung steht (der bspw. axial beabstandet angeordnet und insbesondere als GMR- oder AMR-Sensor ausgeildet ist). Dadurch kann die Drehlage des Rotors 15 erfasst werden. Zur Zentrierung der Elektromotor-Patrone 12 sind zwischen dieser und der Elektronikeinheit 26 Zentriermittel 34 ausgebildet, die im Ausführungsbeispiel als Stützdome 35 ausgeführt, die an der Elektronikeinheit 26 angeformt sind. Die Zentriermittel 34 (beispielsweise drei Stützdome 35) weisen eine axiale Anschlagsfläche 36 auf, an der der Lagerschild 54 der Elektromotor-Patrone 12 axial anliegt. Der gegenüberliegende Lagerschild 56 liegt axial an einem Anschlag 45 des Lenkgetriebes 44 an, sodass die Elektromotor-Patrone 12 axial zwischen der Elektronikeinheit 26 und dem Längsgetriebe 44 eingespannt ist. Hierzu ist die Motorengehäuse-Hülse 18 im dargestellten Ausführungsbeispiel fest und dicht mit der Elektronikeinheit 26 verbunden, vorzugsweise durch die Ausbildung einer umlaufenden Schweißnaht 38. Zwischen dem Lenkgetriebe 44 und der Motorengehäuse-Hülse 18 ist ein Dichtring 58 angeordnet, der vorzugsweise als Flachdichtung 60 ausgebildet ist. Der Dichtring 58 ist kompressibel ausgebildet, sodass Längentoleranzen der Elektromotor-Patrone 12 bzw. der montierten Motorengehäuse-Hülse 18 ausgeglichen werden können. Zur axialen Verspannung der Elektromotor-Patrone 12 sind zwischen dem Getriebe 44 und der Elektronikeinheit 26 Spannmittel 62 angeordnet, die beispielsweise als Schrauben 64 ausgebildet sind. In Figur 1 weist hierzu die Elektronikeinheit 26 ein Elektronikgehäuse 27 mit einer Grundplatte 28 auf, in der Aufnahmen 66 (beispielsweise Schraubdome) ausgebildet sind. Durch die Aufnahmen 66 sind die Schrauben 64 hindurchgeführt, die beispielsweise in entsprechende Gewinde des Gehäuses 46 des Lenkgetriebes 44 eingeschraubt sind. Dabei kann über das Anzugsmoment der Spannschrauben 64 eine definierte Vorspannung der Elektromotor-Patrone 12 eingestellt werden. Beispielsweise sind drei oder vier Schrauben 64 angeordnet, die jedoch auch alternativ durch Aufnahmen im Gehäuse 46 aufgenommen werden könnten und mit entsprechenden Gewinden mit der Elektronikeinheit 26 verschraubt werden (in oberer Bildhälfte dargestellt). In einer weiteren nicht dargestellten Variante können die Aufnahmen 66 auch an die festgeschweißte Motorgehäuse-Hülse 18 angeformt werden, wodurch sich die axiale Ausdehnung der Spannmittel 62 (Schrauben 64) deutlich verkürzt.

Zur Montage der Elektromotor-Patrone 12 auf eine Kundenschnittstelle 48 des Lenkgetriebes 44 weist das Lenkgetriebe 44 zusätzlich zum axialen Anschlag 45 auch eine radiale Zentrierung 50 auf. Dazu greift beispielsweise ein axialer Fortsatz 51 in eine entsprechende axiale Aussparung 49 im Lagerschild 56 der Elektromotor-Patrone 12 ein, sodass diese konzentrisch zueinander angeordnet sind, beispielsweise mittel eines angeformten Konus. Das Abtriebsmoment des Elektromotors 13 wird dann über ein nicht mehr dargestelltes Abtriebsritzel auf die Getriebebauteile des Lenkgetriebes 44 übertragen. Bei dieser Ausführung ist es nicht notwendig, dass das Statorpaket 14 in der Elektromotor-Patrone 12 verschweißt wird, da das Statorpaket 14 axial direkt zwischen der Elektronikeinheit 26 und dem Lenkgetriebe 44 verspannt ist. Zwischen der Elektromotor-Patrone 12 und der Motorgehäuse-Hülse 18 sind gegebenenfalls Entkopplungsmittel 20 bzw. Arretierungen 22 angeordnet, die beispielsweise als Spannstifte 24 ausgebildet sind. Diese Entkopplungs- bzw. Arretierungsmittel 20, 22 sind jedoch so ausgebildet, dass die Motorgehäuse-Hülse 18 axial auf der Elektromotor-Patrone 12 verschiebbar ist, sodass die elektrische Verbindung zwischen den Phasendrähten 32 und den Kontaktfahnen 30 vor dem Verschweißen der Motorengehäuse-Hülse 18 herstellbar ist. Hierzu sind die Zentriermittel 34 vorzugsweise nicht über den kompletten Umfang ausgebildet, sondern vorzugsweise als mehrere separate Stützdome 35, zwischen denen hindurch elektrische Anschlüsse verschweißt werden können. Vorzugsweise werden diese mittels Schweißzangen miteinander verbunden (Widerstandssschweißen).

Zur Montage der Getriebe-Antriebseinheit 10 - bestehend aus einer elektrischen Antriebseinheit 11, dem sogenannten PowerPack 11 (PP = Elektromotor 13 mit der Elektronikeinheit 26) mit einem Getriebe 44 - wird die Motorgehäuse-Hülse 18 zunächst zu etwa 2/3 über die fertig montierte Elektromotor-Patrone 12 geschoben und mit den Entkopplungs- bzw. Arretierungsbauteilen 20, 22 positioniert. Dann wird die fertig montierte Elektronikeinheit (ECU) 26 auf die Elektromotor-Patrone 12 aufgesetzt und so zu dieser zentriert, dass die Schweißfahnen 31 der ECU 26 direkt an den Phasendrähten 32 zu liegen kommen. Die ECU 26 zentriert sich dabei an geometrisch im Lagerschild 54 der Elektromotor-Patronen 12 integrierten Fixierungen (z.B. drei Stützdome 35), in die diese beim Aufsetzen auf die Elektromotor-Patrone 12 eingreift. Die ECU 26 wird nun mittels Schweißzangen - unter einer Vorspannung von ECU 26 und Elektromotor-Patrone 12, die der Verspannung im späteren verschraubten Zustand bei entsprechender Temperatur entspricht - mit den Phasendrähte 32 des Elektromotors 13 verschweißt. Nun wird die Motorgehäuse-Hülse 18 wie üblich gegen die Anschlagsfläche 36 der ECU-Grundplatte 28 hochgeschoben und mit dieser per Laserschweißverfahren dicht verschweißt. Der Längen-Vorhalt für Toleranzen aus der Elektromotor-Patrone 12 gegenüber den Toleranzen der Motorgehäuse-Hülse 18 zwischen den Phasendrähten 32 und den Kontaktfahnen 30 kann entfallen, da die axiale Verschiebbarkeit gegenüber dem Gehäuse 46 dies ausgleicht. Die auf diese Weise fertig montierte Getriebe-Antriebseinheit 10 wird dann über den radialen Kundeneinpass 50 auf die Anstellfläche des Lenkgetriebegehäuses 46 bzw. des Lenkgehäuses aufgesetzt. Dabei schiebt sich die Motorgehäuse-Hülse 18 außen über das Gehäuse 46. Letztlich wird dann die Elektromotor-Patrone 12 mit den drei (oder vier) Schrauben 64 auf das Gehäuse 46 verspannt, wobei sich die Motorgehäuse-Hülse 18 entsprechend weiter die Motor-Patrone 12 schiebt.

Um die Dichtheit der Motorgehäuse-Hülse 18 zum Gehäuse 46 des Lenkgetriebes 44 zu gewährleisten ist in Figur 1 eine Variante mit einer ringförmigen Flachdichtung 60 dargestellt, die sich je nach Länge der Motorgehäuse-Hülse 18 über der entsprechenden Getriebegehäusefläche und entsprechend der Vorspannung durch die 3-4 Schrauben entsprechend stark komprimiert. Alternativ zu einer solchen Flachdichtung 60 ist auch mindestens eine umlaufende Klebstoffwulst 70 denkbar, die beim Aufschieben der Motorgehäuse-Hülse 18 eine Verklebung zwischen der Motorgehäuse-Hülse 18 und dem Gehäuse 46 bewirkt. Diese Verklebung darf erst nach dem Verschrauben aushärten. Die Verklebung muss Wärme vom Elektromotor 13 ins Gehäuse 46 des Lenkgetriebes 44 übertragen können, und muss nach dem Aushärten noch so elastisch sein, dass axiale Ausdehnungsunterschiede - beispielsweise zwischen einer Aluminium-Motorgehäuse-Hülse 18 und einem Grauguss-Lenkgehäuse - bei jeder im Kraftfahrzeug möglichen Betriebs- bzw. Umgebungstemperatur der Lenkung/Getriebe-Antriebseinheit 10 ausgeglichen werden können.

Die Vorspannung der Elektromotor-Patrone 12 wird vom Gehäuse 46 über den getriebeseitigen Lagerschild 56 - der sich wie der ECU-seitige Lagerschild 54 auf je einer der beidseitig am Statorpaket 14 angebrachten bearbeiteten Flächen abstützt - auf die beispielhaft dargestellten Stützdome 35 der ECU 26 übertragen. Über die Aufnahmen 66 der ECU 26 für die Spannmittel 62 wird die Verspannung gegenüber dem Lenkgetriebe 44 mittels der in diesem gehaltenen Schrauben 64 erzeugt. Hierbei ist auf eine stabile Ausführung der entsprechenden ECU-Grundplatte 28 zu achten, da sich diese durch die Vorspannungsbelastungen nicht durchbiegen darf, um zu verhindern, dass auf der Rückseite der Grundplatte 28 aufgebrachte elektronische Bauteile 42 sich lösen könnten. Die durch eine derart konzipierte Grundplatte 28 etwas erhöhten Mehrkosten, werden durch die Einsparungen am PP mehr als ausgeglichen. Auch fertigungstechnisch stellt der erfindungsgemäße Aufbau ein vereinfachtes Montagekonzept dar, da als Motorgehäuse-Hülse 18 ein unbearbeitetes Aluminium-Strangpressgehäuse verwendet werden kann, wodurch die akustischen Vorteile von kaltverformten Aluminium-Legierungen gegenüber Guss-Gehäusen - wie bei heute bekannten Systemen - beibehalten werden können.

Eine alternative Lösung für eine axial verschiebbare Motorgehäuse-Hülse 18 ist eine Variante mit einem im Bereich der ECU 26 axial verschiebbaren Motorgehäuse-Hülse 18. Bei dieser Variante ist die Motorgehäuse-Hülse 18 entweder Bestandteil des Lenkgetriebes 44/Gehäuses 46 oder ist mit diesem untrennbar und dicht verbunden (z.B. angeschweißt). In dieser Variante ist die ECU 26 ebenfalls mit der Elektromotor-Patrone 12 verbunden und würde mittels Schrauben 64 die Elektromotor-Patrone 12 gegen das Lenkgetriebe 44 verspannen. Das aus dem Gehäuse 46 hochstehende Gehäuseteil nimmt die Elektromotor-Patrone 12 mit den vormontierten Entkopplungs- bzw. Arretierungsmitteln 20, 22 (z.B. Federklammer) auf und wird an der Anstellfläche im Kundeneinpass 50 zentriert und dann über drei bis vier Schrauben 64 verschraubt. Die Längenunterschiede werden nun über die an der ECU-Grundplatte 28 aufgelegte Flachdichtung 60 aufgenommen. Dabei wird der Dichtring 58 je nach Länge der Motorgehäuse-Hülse 18 über der entsprechende Gehäusefläche der ECU 26 und entsprechend der Vorspannung durch die Schrauben 64 entsprechend stark komprimiert. Auch hier ist alternativ eine entsprechende Klebeverbindung möglich. Die beschriebene alternative Lösung erfordert ein starkes Entgegenkommen der Kundeseite. Für den Fall, dass die Motorgehäuse-Hülse 18 und das Gehäuse 46 auf diese Weise ein- und dasselbe Bauteil aus Grauguss oder Alu-Druckguss sind, können die Schraubaugen (Aufnahmen 66) an das Ende des "Quasi-Motorgehäuses" konstruiert werden, und so wesentlich kürzere Schrauben 64 verwendet werden (Kosteneinsparung). Allerdings werden dann die akustischen Nachteile eines Grauguss-Motorgehäuses in Kauf genommen.

Es sei angemerkt, dass hinsichtlich der in der Figur und in der Beschreibung gezeigten Ausführungsbeispiele vielfältige Kombinationsmöglichkeiten der einzelnen Merkmale untereinander möglich sind. So können beispielsweise die Aufnahmen 66 für die Spannmittel 62 an der ECU 26 oder am Lenkgetriebe 44 oder auch direkt an der Motorgehäuse-Hülse 18 angeformt werden. Der Elektromotor 13 ist vorzugsweise elektronisch kommutiert (EC-Motor), kann aber auch mittels Kohlebürsten kommutiert werden. Anstelle des Lenkgetriebes 44 kann die PP (Elektromotor 13 mit Elektronikgehäuse 27) auch für andere Antriebsanwendungen eingesetzt werden, die eine entsprechende Kundenschnittstelle aufweisen.

## Patentansprüche

1. Verfahren zum Verbinden einer elektrischen Antriebseinheit (11) mit einem Getriebegehäuse (46) - insbesondere einer Servolenkung im Kraftfahrzeug - wobei die elektrische Antriebseinheit (10) eine Elektronikeinheit (26), sowie eine Elektromotor-Patrone (12) eines Elektromotors (13) aufweist, die in einer Motorgehäuse-Hülse (18) angeordnet ist, wobei zuerst eine elektrische Verbindung zwischen der Elektromotor-Patrone (12) und der Elektronikeinheit (26) hergestellt wird, und anschließend die Motorgehäuse-Hülse (18) vollständig über die Elektromotor-Patrone (12) geschoben wird, bis diese an der Elektronikeinheit (26) anliegt, **dadurch gekennzeichnet, dass** die Elektromotor-Patrone (12) zwischen der Elektronikeinheit (26) und dem Getriebegehäuse (46) eines Lenkgetriebes (44) angeordnet wird, wobei die Elektromotor-Patrone (12) einen ersten Lagerschild (54) zur Elektronikeinheit (26) hin, und einen zweiten Lagerschild (56) zum Lenkgetriebe (44) hin aufweist, und die Elektromotor-Patrone (12) zwischen dem Getriebe (44) und der Elektronikeinheit (26) mittels Spannmittel (62) axial verspannt wird.

2. Verfahren nach Anspruch 1, **dadurch gekennzeichnet, dass** die Motorgehäuse-Hülse (18) schon teilweise auf die Elektromotor-Patrone (12) geschoben ist, während die elektrische Verbindung zu der Elektronikeinheit (26) - insbesondere mittels Schweißen - erzeugt wird.

3. Verfahren nach Anspruch 1 oder 2, **dadurch gekennzeichnet, dass** die Motorgehäuse-Hülse (18) mit einem Elektronikgehäuse (27) der Elektronikeinheit (26) verschweißt wird.

4. Verfahren nach einem der vorhergehenden Ansprüche, **dadurch gekennzeichnet, dass** zur axialen Verspannung das Elektronikgehäuse (27) an das Getriebegehäuse (46) angeschraubt wird.

5. Verfahren nach einem der vorhergehenden Ansprüche, **dadurch gekennzeichnet, dass** zwischen der Motorgehäuse-Hülse (18) und dem Getriebegehäuse (46) eine Dichtung (58) angeordnet ist, die das der Elektronikeinheit (26) axial gegenüberliegende Ende der Elektromotor-Patrone (12) gegenüber dem Getriebegehäuse (46) abdichtet.

6. Verfahren nach einem der Ansprüche 1 oder 2, **dadurch gekennzeichnet, dass** am Getriebegehäuse (46) zuerst die Motorgehäuse-Hülse (18) dicht angeordnet wird und die Elektromotor-Patrone (12) elektrisch mit der Elektronikeinheit (26) verbunden wird, und anschließend die Elektromotor-Patrone (12) in die Motorgehäuse-Hülse (18) eingeschoben wird, wobei insbesondere die Dichtung (58) zwischen der Elektronikeinheit (26) und der Motorgehäuse-Hülse (18) angeordnet ist.

7. Verfahren nach einem der vorhergehenden Ansprüche, **dadurch gekennzeichnet, dass** die Motorgehäuse-Hülse (18) mittels Strangpress-Verfahren aus Metall hergestellt ist, und insbesondere keine Aufnahmen für Spannmittel (62) zwischen dem Gehäuse (46) des Getriebes (44) und der Elektronikeinheit (26) aufweist.

8. Elektrische Antriebseinheit (11), insbesondere zum Verstellen beweglicher Teile im Kraftfahrzeug, mit einem Getriebegehäuse (46) - insbesondere für eine Servolenkung im Kraftfahrzeug - wobei die elektrische Antriebseinheit (11) eine Elektronikeinheit (26) mit einem Elektronikgehäuse (27), sowie eine Elektromotor-Patrone (12) aufweist, die innerhalb einer Motorgehäuse-Hülse (18) angeordnet ist, wobei die Elektromotor-Patrone (12) vor der Montage an das Elektronikgehäuse (27) axial verschiebbar in der Motorgehäuse-Hülse (18) ausgeführt ist, **dadurch gekennzeichnet, dass** die Elektromotor-Patrone (12) zwischen der Elektronikeinheit (26) und dem Getriebegehäuse (46) eines Lenkgetriebes (44) angeordnet ist, und die Elektromotor-Patrone (12) einen ersten Lagerschild (54) zur Elektronikeinheit (26) hin, und einen zweiten Lagerschild (56) zum Lenkgetriebe (44) hin aufweist, wobei zur axialen Verspannung der Elektromotor-Patrone (12) zwischen dem Getriebe (44) und der Elektronikeinheit (26) Spannmittel (62) angeordnet sind.

9. Elektrische Antriebseinheit (11), nach Anspruch 8, **dadurch gekennzeichnet, dass** nach der Montage der Elektromotor-Patrone (12) an das Elektronikgehäuse (27) und an das Getriebegehäuse (46) die Elektromotor-Patrone (12) jeweils axial am Elektronikgehäuse (27) und am Getriebegehäuse (46) anliegt.

10. Elektrische Antriebseinheit (11), nach einem der Ansprüche 8 oder 9, **dadurch gekennzeichnet, dass** nach der Montage der Elektromotor-Patrone (12) die Motorgehäuse-Hülse (18) stoffschlüssig mit dem Elektronikgehäuse verbunden - insbesondere verschweißt - ist, und mittels Spannmitteln (62) axial gegen das Getriebegehäuse (46) verspannt ist.

11. Elektrische Antriebseinheit (11), nach einem der Ansprüche 8 bis 10, **dadurch gekennzeichnet, dass** ein elastisch ausgebildeter Dichtring (58) zwischen der Motorgehäuse-Hülse (18) und der Elektronikeinheit (26) oder zwischen der Motorgehäuse-Hülse (18) und dem Getriebegehäuse (46) angeordnet ist.

12. Elektrische Antriebseinheit (11), nach einem der Ansprüche 8 bis 11, **dadurch gekennzeichnet, dass** die Spannmittel (62) - insbesondere Schrauben (64) - radial außerhalb der Motorgehäuse-Hülse (18) angeordnet sind, insbesondere berührungslos zur Motorgehäuse-Hülse (18).

13. Elektrische Antriebseinheit (11), nach einem der Ansprüche 8 bis 12, **dadurch gekennzeichnet, dass** das Elektronikgehäuse (27) der Elektronikeinheit (26) eine Grundplatte (28) aufweist, die insbesondere aus Metall gefertigt ist.

14. Elektrische Antriebseinheit (11), nach einem der Ansprüche 8 bis 13, **dadurch gekennzeichnet, dass** die Motorengehäuse-Hülse (18) aus einem anderen Material gefertigt ist, als das Material der Grundplatte (28) der Elektronikeinheit (26) und/oder des Materials des Gehäuses (46) des Lenkungsgetriebes (44).

## Claims

1. Method for connecting an electric drive unit (11) to a gear mechanism housing (46) - in particular of a power steering system in a motor vehicle - with the electric drive unit (10) having an electronics unit (26) and an electric motor cartridge (12) of an electric motor (13), which electric motor cartridge is arranged in a motor housing sleeve (18), with an electrical connection first being established between the electric motor cartridge (12) and the electronics unit (26), and the motor housing sleeve (18) then being pushed completely over the electric motor cartridge (12) until the said motor housing sleeve bears against the electronics unit (26), **characterized in that** the electric motor cartridge (12) is arranged between the electronics unit (26) and the gear mechanism housing (46) of a steering gear mechanism (44), with the electric motor cartridge (12) having a first end plate (54) in the direction of the electronics unit (26) and a second end plate (56) in the direction of the steering gear mechanism (44), and the electric motor cartridge (12) being axially clamped between the gear mechanism (44) and the electronics unit (26) by means of clamping means (62).

2. Method according to Claim 1, **characterized in that** the motor housing sleeve (18) is already partially pushed onto the electric motor cartridge (12) while the electrical connection to the electronics unit (26) - in particular by means of welding - is being produced.

3. Method according to Claim 1 or 2, **characterized in that** the motor housing sleeve (18) is welded to an electronics housing (27) of the electronics unit (26).

4. Method according to one of the preceding claims, **characterized in that** the electronics housing (27) is screwed to the gear mechanism housing (46) for axial clamping purposes.

5. Method according to one of the preceding claims, **characterized in that** a seal (58) is arranged between the motor housing sleeve (18) and the gear mechanism housing (46), the said seal sealing off that end of the electric motor cartridge (12) which is situated axially opposite the electronics unit (26) from the gear mechanism housing (46).

6. Method according to either of Claims 1 and 2, **characterized in that** the motor housing sleeve (18) is first arranged in a sealing manner on the gear mechanism housing (46), and the electric motor cartridge (12) is electrically connected to the electronics unit (26), and the electric motor cartridge (12) is then inserted into the motor housing sleeve (18), with, in particular, the seal (58) being arranged between the electronics unit (26) and the motor housing sleeve (18).

7. Method according to one of the preceding claims, **characterized in that** the motor housing sleeve (18) is produced from metal using an extrusion process, and, in particular, does not have any receptacles for clamping means (62) between the housing (46) of the gear mechanism (44) and the electronics unit (26).

8. Electric drive unit (11), in particular for adjusting moving parts in a motor vehicle, having a gear mechanism housing (46) - in particular for a power steering system in a motor vehicle - with the electric drive unit (11) having an electronics unit (26) with an electronics housing (27), and an electric motor cartridge (12) which is arranged within a motor housing sleeve (18), with the electric motor cartridge (12) being designed such that it is axially displaceable in the motor housing sleeve (18) before being mounted on the electronics housing (27), **characterized in that** the electric motor cartridge (12) is arranged between the electronics unit (26) and the gear mechanism housing (46) of a steering gear mechanism (44), and the electric motor cartridge (12) has a first end plate (54) in the direction of the electronics unit (26) and a second end plate (56) in the direction of the steering gear mechanism (44), with clamping means (62) being arranged between the gear mechanism (44) and the electronics unit (26) for the purpose of axially clamping the electric motor cartridge (12).

9. Electric drive unit (11) according to Claim 8, **characterized in that**, after the electric motor cartridge (12) is mounted on the electronics housing (27) and on the gear mechanism housing (46), the electric motor cartridge (12) bears axially on the electronics housing (27) and on the gear mechanism housing (46) in each case.

10. Electric drive unit (11) according to either of Claims 8 and 9, **characterized in that**, after the electric motor cartridge (12) is mounted, the motor housing sleeve (18) is cohesively connected - in particular welded - to the electronics housing, and is axially clamped against the gear mechanism housing (46) by means of clamping means (62).

11. Electric drive unit (11) according to one of Claims 8 to 10, **characterized in that** an elastic sealing ring (58) is arranged between the motor housing sleeve (18) and the electronics unit (26) or between the motor housing sleeve (18) and the gear mechanism housing (46).

12. Electric drive unit (11) according to one of Claims 8 to 11, **characterized in that** the clamping means (62) - in particular screws (64) - are arranged radially outside the motor housing sleeve (18), in particular without making contact with the motor housing sleeve (18).

13. Electric drive unit (11) according to one of Claims 8 to 12, **characterized in that** the electronics housing (27) of the electronics unit (26) has a base plate (28) which is produced, in particular, from metal.

14. Electric drive unit (11) according to one of Claims 8 to 13, **characterized in that** the motor housing sleeve (18) is produced from a material other than the material of the base plate (28) of the electronics unit (26) and/or the material of the housing (46) of the steering gear mechanism (44).

## Revendications

1. Procédé pour relier une unité électrique d'entraînement (11) à un boîtier de transmission (46), en particulier à une servo-direction d'un véhicule automobile, l'unité de raccordement électrique (10) présentant une unité électronique (26) ainsi qu'une cartouche (12) de moteur électrique (13) disposée dans une douille (18) de boîtier de moteur, une liaison électrique entre la cartouche (12) de moteur électrique et l'unité électronique (26) étant d'abord établie et la douille (18) de boîtier de moteur étant ensuite passée complètement au-dessus de la cartouche (12) de moteur électrique jusqu'à ce que cette dernière repose contre l'unité électronique (26),
**caractérisé en ce que**
la cartouche (12) de moteur électrique est disposée entre l'unité électronique (26) et le boîtier (46) d'une transmission de direction (44), la cartouche (12) de moteur électrique présentant un premier flasque de palier (54) orienté vers l'unité électronique (26) et un deuxième flasque de palier (56) orienté vers la transmission de direction (44), la cartouche (12) de moteur électrique étant serrée axialement à l'aide de moyens de serrage (62) entre la transmission (44) et l'unité électronique (26).

2. Procédé selon la revendication 1, **caractérisé en ce que** la douille (18) du boîtier de moteur est déjà passée en partie sur la cartouche (12) de moteur électrique pendant que la liaison électrique avec l'unité électronique (26) est formée, en particulier par soudage.

3. Procédé selon les revendications 1 ou 2, **caractérisé en ce que** la douille (18) du boîtier de moteur est soudée à un boîtier d'électronique (27) de l'unité électronique (26).

4. Procédé selon l'une des revendications précédentes, **caractérisé en ce que** pour le serrage axial, le boîtier d'électronique (27) est vissé sur le boîtier de transmission (46).

5. Procédé selon l'une des revendications précédentes, **caractérisé en ce qu'**un joint d'étanchéité (58) qui assure l'étanchéité de l'extrémité de la cartouche (12) de moteur électrique opposée axialement à l'unité électronique (26) vis-à-vis du boîtier de transmission (46) est prévu entre la douille (18) du boîtier de moteur et le boîtier de transmission (46).

6. Procédé selon l'une des revendications 1 ou 2, **caractérisé en ce que** la douille (18) du boîtier de moteur est d'abord disposée de manière étanche sur le boîtier de transmission (46) et la cartouche (12) de moteur électrique est raccordée électriquement à l'unité électronique (26), la cartouche (12) de moteur électrique étant ensuite insérée dans la douille (18) du boîtier de moteur, le joint d'étanchéité (58) étant disposé en particulier entre l'unité électronique (26) et la douille (18) du boîtier de moteur.

7. Procédé selon l'une des revendications précédentes, **caractérisé en ce que** la douille (18) du boîtier de moteur est réalisée en métal par un procédé d'extrusion à la presse et ne présente en particulier pas de logement pour des moyens de serrage (62) entre le boîtier (46) de la transmission (44) et l'unité électronique (26).

8. Unité d'entraînement électrique (11), en particulier destinée à déplacer des pièces mobiles d'un véhicule automobile et présentant un boîtier de transmission (46), notamment pour une servo-direction de véhicule automobile, l'unité d'entraînement électrique (11) présentant une électronique (26) dotée d'un boîtier (27) d'électronique ainsi qu'une cartouche (12) de moteur électrique disposée à l'intérieur d'une douille (18) de boîtier de moteur, la cartouche (12) de moteur électrique pouvant être déplacée axialement par la douille (18) du boîtier de moteur avant son montage sur le boîtier d'électronique (27),
**caractérisée en ce que**
la cartouche (12) de moteur électrique est disposée entre l'unité électronique (26) et le boîtier (46) d'une transmission de direction (44), la cartouche (12) de moteur électrique présentant un premier flasque de palier (54) orienté vers l'unité électronique (26) et un deuxième flasque de palier (56) orienté vers la transmission de direction (44), des moyens de serrage (62) étant disposés entre la transmission (44) et l'unité électronique (26) pour permettre un serrage axial de la cartouche (12) de moteur électrique.

9. Unité d'entraînement électrique (11) selon la revendication 8, **caractérisée en ce qu'**après le montage de la cartouche (12) de moteur électrique sur le boîtier (27) d'électronique et sur le boîtier de transmission (46), la cartouche (12) de moteur électrique repose axialement à la fois sur le boîtier d'électronique (27) et sur le boîtier de transmission (46).

10. Unité d'entraînement électrique (11) selon l'une des revendications 8 ou 9, **caractérisée en ce qu'**après le montage de la cartouche (12) du moteur électrique, la douille (18) du boîtier de moteur est reliée en correspondance de matière et en particulier soudée sur le boîtier d'électronique et est serrée axialement contre le boîtier de transmission (46) à l'aide de moyens de serrage (62).

11. Unité d'entraînement électrique (11) selon l'une des revendications 8 à 10, **caractérisée en ce qu'**une bague d'étanchéité (58) élastique est disposée entre la douille (18) du boîtier de moteur et l'unité électronique (26) ou entre la douille (18) du boîtier du moteur et le boîtier de transmission (46).

12. Unité d'entraînement électrique (11) selon l'une des revendications 8 à 11, **caractérisée en ce que** les moyens de serrage (62), notamment des vis (64), sont disposés radialement à l'extérieur de la douille (18) du boîtier de moteur et en particulier sans contact avec la douille (18) du boîtier du moteur.

13. Unité d'entraînement électrique (11) selon l'une des revendications 8 à 12, **caractérisée en ce que** le boîtier d'électronique (27) de l'unité électronique (26) présente une plaque de base (28) réalisée en particulier en métal.

14. Unité d'entraînement électrique (11) selon l'une des revendications 8 à 13, **caractérisée en ce que** la douille (18) du boîtier de moteur est réalisée en un autre matériau que celui de la plaque de base (28) de l'unité électronique (26) et/ou celui du boîtier (46) de la transmission de direction (44).
